(19) Europäisches Patentamt
European Patent Office
Office européen des brevets

(11) Veröffentlichungsnummer: **0 137 296**
**A2**

# (12) EUROPÄISCHE PATENTANMELDUNG

(21) Anmeldenummer: **84110450.8**

(22) Anmeldetag: **03.09.84**

(51) Int. Cl.[4]: **C 08 L 25/12**
C 08 L 35/06

(30) Priorität: **08.09.83 DE 3332327**

(43) Veröffentlichungstag der Anmeldung:
**17.04.85 Patentblatt 85/16**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Hambrecht, Juergen, Dr.**
**Werderstrasse 30**
**D-6900 Heidelberg(DE)**

(72) Erfinder: **Illers, Karl Heinz, Dr.**
**Huttenstrasse 20**
**D-6701 Otterstadt(DE)**

(72) Erfinder: **Jung, Rudolf H. Dr.**
**Wachenheimer Strasse 6 d**
**D-6520 Worms 1(DE)**

(72) Erfinder: **Echte, Adolf, Dr.**
**Leuschnerstrasse 42**
**D-6700 Ludwigshafen(DE)**

(72) Erfinder: **Swoboda, Johann, Dr.**
**Neuwiesenstrasse 28**
**D-6700 Ludwigshafen(DE)**

(54) **Thermoplastische Formmasse.**

(57) Die Erfindung betrifft eine thermoplastische Formmasse, enthaltend

A) 5 bis 95 Gew.%, bezogen auf A+B, eines Styrol-Acrylnitril-Copolymeren, das aufgebaut ist aus
   $a_1$) 99 bis 50 Gew.%, bezogen auf A, Styrol und/oder einem kernalkylsubstituierten Styrolderivat
   und
   $a_2$) 1 bis 50 Gew.%, bezogen auf A, Acrylnitril
   und

B) 95 bis 5 Gew.%, bezogen auf A+B, mindestens eines Styrol-Maleinsäureanhydridcopolymeren, bestehend aus
   $b_1$) 99 bis 50 Gew.%, bezogen auf B, Styrol und/oder einem kernalkylsubstituierten Styrolderivat
   und
   $b_2$) 1 bis 50 Gew.%, bezogen auf B, Maleinsäureanhydrid.

Wesentlich zur Erzielung transparenter Produkte guter Ausbeute ist, daß das Gewichtsverhältnis der Comonomeren $a_2$) und $b_2$) in den Copolymerisaten A) und B)

$$1{,}45 \geq \frac{a_2}{b_2} \geq 0{,}7$$

beträgt. Die Formmase wird zur Herstellung von Formteilen für verschiedene Anwendungsgebiete verwendet.

EP 0 137 296 A2

Thermoplastische Formmasse

Die Erfindung betrifft eine transparente und wärmeformbeständige thermoplastische Formmasse, die aus einem Styrol-Acrylnitril-Copolymerisat und einem Styrol-Maleinsäureanhydrid-Copolymerisat aufgebaut ist.

Copolymerisate aus Styrol und Acrylnitril sind bekannt und z.B. in Ullmann's Encyklopädie der technischen Chemie, Band 19, 4. Auflage, Verlag Chemie, Weinheim, (1980), S. 272f (1) beschrieben. Sie lassen sich gut thermoplastisch verarbeiten, sind hart, transparent und besitzen im Vergleich zu reinem Polystyrol eine gute Lösungsmittelbeständigkeit. Ihre Wärmeformbeständigkeit läßt jedoch bei vielen Anwendungen, insbesondere beim Langzeitkontakt mit kochendem Wasser, d.h. bei Temperaturen über 100°C Wünsche offen. Es ist deshalb verschiedentlich versucht worden, die Wärmeformbeständigkeit der SAN-Copolymerisate durch teilweisen oder vollständigen Ersatz von Styrol durch seitenketten- oder kernalkylierte Styrole zu verbessern. Doch dies gelingt nur in beschränktem Maße, da die resultierenden Copolymeren eine starke Gelbfärbung und eine erhöhte Depolymerisationsneigung bei den notwendigerweise erhöhten Verarbeitungstemperaturen aufweisen.

Copolymerisate aus Styrol und Maleinsäureanhydrid sind ebenfalls bekannt und in (1) beschrieben. Sie besitzen eine höhere Wärmeformbeständigkeit. Ihre mechanischen Eigenschaften, wie Steifigkeit und Zähigkeit, sind jedoch unbefriedigend und ihre Spannungsrißbeständigkeit ist für viele Anwendungsbereiche nicht ausreichend.

Es bestand deshalb die Aufgabe, thermoplastische Formmassen herzustellen, die eine hohe Wärmeformbeständigkeit aufweisen, glasklar, transparent sind, neben einer hohen Steifigkeit eine gute Zähigkeit besitzen und zudem eine den Styrol-Acrylnitril-Copolymerisaten vergleichbare Spannungsrißbeständigkeit aufweisen.

Diese Aufgabe wird durch eine thermoplastische Formmasse gemäß Patentanspruch 1 gelöst.

Die Erfindung betrifft somit eine thermoplastische Formmasse, enthaltend, vorzugsweise bestehend aus;

A) 5 bis 95 Gew.%, bezogen auf A+B, mindestens eines Styrol-Acrylnitril--Copolymeren, das aufgebaut ist aus

Vo/HB

$a_1$) 99 bis 50 Gew.%, bezogen auf A, Styrol und/oder einem kernalkylsubstituierten Styrolderivat
und
$a_2$) 1 bis 50 Gew.%, bezogen auf A, Acrylnitril

und

B) 95 bis 5 Gew.%, bezogen auf A+B, mindestens eines Styrol-Maleinsäureanhydrid-Copolymeren, bestehend aus

$b_1$) 99 bis 50 Gew.%, bezogen auf B, Styrol und/oder einem kernalkylsubstituierten Styrolderivat
und
$b_2$) 1 bis 50 Gew.%, bezogen auf B, Maleinsäureanhydrid

gegebenenfalls enthaltend

C) übliche Zusatzstoffe.

Die Formmasse ist dadurch gekennzeichnet, daß das Gewichts-Verhältnis der Comonomeren $a_2$) zu $b_2$) in den Copolymerisaten A) und B)

$$1{,}45 \geq \frac{a_2}{b_2} \geq 0{,}7$$

beträgt.

Es war bekannt, daß einige wenige thermoplastische Kunststoffe miteinander mischbar sind; die weitaus größte Zahl der Kunststoffe erweisen sich jedoch als unverträglich, wenn man versucht, aus zwei oder mehreren Komponenten Mischungen herzustellen: Unverträglichkeit ist die Regel und Mischbarkeit ist die Ausnahme (s. z.B. L. Bohn, Kolloid-Zeitschrift 213, Seite 55, 1966 oder G.E. Molau, Journal of Polymer Science, Teil B, 3, Seite 1007, 1965, B.J. Schmitt, Angew. Chemie 91, 286 (1976)). Verträglichkeit ist aber Voraussetzung dafür, daß Kunststoffmischungen brauchbare Eigenschaften haben: Wenn die Komponenten einer Kunststoffmischung unverträglich sind, stellen die Phasengrenzen Keimstellen für Bruch dar und sind zudem opak.

Es war deshalb völlig überraschend und für den Fachmann nicht vorhersehbar, daß die erfindungsgemäßen Polymermischungen aus Styrol-Acrylnitril--Copolymerisaten und Styrol-Maleinsäureanhydrid-Copolymerisaten in den erfindungsgemäßen Bereichen vollständig mischbar und deshalb glasklar transparent sind. Darüber hinaus sind die erfindungsgemäßen Formmassen durch eine ausgezeichnete Wärmeformbeständigkeit, eine ausgewogene Steifigkeits/Zähigkeitskombination und eine hervorragende Chemikalienbeständigkeit gekennzeichnet.

Nachstehend werden die Komponenten der erfindungsgemäßen Formmassen beschrieben.

Die erfindungsgemäße Formmasse enthält mindestens ein Copolymerisat A und mindestens ein Copolymerisat B; vorzugsweise besteht die Formmasse aus den genannten Copolymerisaten ( A+B = 100 %).

Komponente A

Für die erfindungsgemäßen Formmassen werden kautschukfreie Styrol-Acrylnitril-Copolymerisate angewendet; diese bestehen im wesentlichen aus Copolymerisaten, die 1 bis 50 Gew.% Acrylnitril $a_2$) und 50 bis 99 Gew.% Styrol enthalten. Der Styrolbestandteil kann, um die Wärmeformbeständigkeit zu verbessern, ganz oder teilweise durch kernalkyliertes Styrol, insbesondere p-Methylstyrol, ersetzt sein. Styrol-Acrylnitril-Copolymerisate sind im Handel erhältlich und können z.B. nach der Lehre der DE-AS 1 001 001 bzw. DE-PS 1 003 436 hergestellt werden. Der Molekulargewichtsbereich der Copolymerisate kann $M_w = 8.10^4$ bis $M_w = 5 . 10^5$ (Gewichtsmittel $M_w$ aus Lichtstreuung) betragen.

Das Copolymerisat A ist in der erfindungsgemäßen Formmasse in einem Anteil von 5 bis 95 Gew.%, vorzugsweise von 20 bis 80 Gew.% und insbesondere von 30 bis 50 Gew.%, jeweils bezogen auf die Summe der Einzelkomponenten A und B, enthalten.

Komponente B

Das Copolymerisat B wird durch kontinuierliche Mischpolymerisation der Monomeren $b_1$) und $b_2$) bei hohen Temperaturen unter starkem Rühren hergestellt. Die Monomeren $b_1$) und $b_2$) werden kontinuierlich in ein Polymerisationsgefäß eingebracht und gleichzeitig wird eine diesen Mengen entsprechende Menge des Polymerisationsgemisches aus dem Gefäß abgezogen (vgl. A.W. Hanson, R.L. Zimmermann, Industrial Eng. Chemistry 49, (1957) Seite 803). Das Monomere $b_1$), das im wesentlichen Styrol ist, aber auch ein kernalkyliertes Styrol, wie p-Methylstyrol sein kann, ist in Mengen

von 50 bis 99 Gew.%, das Monomere $b_2$, Maleinsäureanhydrid, in Mengen von 1 bis 50 Gew.% im Copolymerisat B enthalten.

Das Copolymerisat B ist in den erfindungsgemäßen thermoplastischen Formmassen in einem Anteil von 5 bis 95 Gew.%, vorzugsweise 20 bis 80 Gew.% und insbesondere von 50 bis 70 Gew.%, bezogen auf die Summe der Einzelkomponenten A und B, enthalten.

Wesentlich für den Aufbau der erfindungsgemäßen Formmasse ist, daß das Gewichtsverhältnis von Acrylnitril zu Maleinsäureanhydrid in einem bestimmten Bereich liegt. Dieses Gewichtsverhältnis der Monomeren $a_2/b_2$ muß im Bereich von kleiner gleich 1,45 bis größer gleich 0,7 liegen. Bei Verhältnissen über- und unterhalb des genannten Bereiches werden jeweils die Werte für die Mechanik der Mischungen schlechter und zugleich nimmt die Transparenz ab.

Komponente C

Zusätzlich zu den Komponenten A und B kann die erfindungsgemäße Formmasse übliche Zusatzstoffe in Mengen von 0,1 bis 10 Teilen, bezogen auf 100 Teile von A+B, enthalten. Als solche Zusatzstoffe seien genannt: Pigmente, Farbstoffe, Füllstoffe, Flammschutzmittel, weitere verträgliche Polymere, Antistatika, Antioxidantien und Schmiermittel.

Die erfindungsgemäßen Formmassen werden nach den üblichen, für die Verarbeitung von Thermoplasten bekannten Verfahren zu Fertigteilen verarbeitet. Sie finden insbesondere Verwendung für Gehäuse von Elektrogeräten, Haushaltsgeräten, Telefonen, für Platten, Rohre, Folien, Kinderspielzeug und im KFZ-Bau.

Herstellung der erfindungsgemäßen Formmasse aus den Komponenten

Die Herstellung der erfindungsgemäßen Formmasse kann, wie nachstehend beschrieben, erfolgen:

Die Komponenten A und B werden als Schmelzen bei Temperaturen zwischen 200 und 280°C auf Extrudern, Walzen oder Knetern bei Verweilzeiten von einigen Minuten gemischt. Man kann aber auch Lösungen der beiden Komponenten A und B vermischen, die Lösungsmittel anschließend entgasen und die Mischungen dann gegebenenfalls mit den Zusatzstoffen abmischen und nochmals konfektionieren. Das Vermischen der Komponenten A und B kann auch gleichzeitig mit den Zusatzstoffen erfolgen.

Die in den Beispielen und Vergleichsversuchen genannten Parameter wurden wie folgt bestimmt:

1. Die Schlagzähigkeit in ($KJ/m^2$) wurde nach DIN 53 453 an spritzgegossenen Normkleinstäben bei einer Massetemperatur von 260°C gemessen.

2. Die Steifigkeit wurde anhand des Elastizitätsmoduls gemäß DIN 53 457 beurteilt.

3. Die Viskositätszahlen (VZ) $\eta_{sp/c}$ in ml/g wurden bei 25°C in einer 0,5 %igen Lösung in Dimethylformamid gemessen.

4. Der Vicat-Erweichungspunkt in °C wurde nach DIN 53 460, Verfahren B, in Silikonöl bestimmt.

5. Die Transparenz wurde visuell beurteilt. Dabei wurde nur zwischen transparent und trüb unterschieden. Auf die verschieden starke Trübung der Vergleichsversuche wurde nicht eingegangen.

6. Die Eigenfarbe der erfindungsgemäßen Formmassen wurde anhand der Jod-Skala analog DIN 53 403 ermittelt. Angegeben werden mg freies Jod in 100 ml einer wäßrigen Jod-Jodkaliumlösung (s. Tabellen 1 und 2).

7. Die Spannungsrißbeständigkeit wurde nach DIN 53 449 ermittelt. Gemessen wurde die Restfestigkeit im Zugversuch. Die Normkleinstäbe wurden für 1 h in iso-Propanol und zum Vergleich 24 h an Luft gelagert. Es wurde folgende Benotung vorgenommen:

| | | Abfall der Restfestigkeit (Zugfestigkeit) nach Lagerung in iso-Propanol im Verhältnis zu Luftlagerung in % |
|---|---|---|
| Note 1 | : | 10 % |
| Note 2 | : | 10-40 % |
| Note 3 | : | > 40 % |

Es zeigt sich überraschenderweise, daß die erfindungsgemäßen Polymermischungen eine glasklare Transparenz bei äußerst geringer Eigenfarbe, eine hohe Wärmeformbeständigkeit, eine hohe Steifigkeit und gleichzeitig gute Zähigkeit und eine ausgezeichnete Spannungsrißbeständigkeit aufweisen.

Für die Herstellung der erfindungsgemäßen Formmassen und von Vergleichsformmassen wurden die nachfolgenden Komponenten verwendet:

Komponenten $A_1$-$A_7$

$A_1$: S-AN-Copolymerisat; 10 % AN; VZ = 70 (ml/g)
$A_2$: S-AN-Copolymerisat; 15 % AN; VZ = 70 (ml/g)
$A_3$: S-AN-Copolymerisat; 20 % AN; VZ = 70 (ml/g)
$A_4$: S-AN-Copolymerisat; 25 % AN; VZ = 70 (ml/g)
$A_5$: S-AN-Copolymerisat; 30 % AN; VZ = 70 (ml/g)
$A_6$: S-AN-Copolymerisat; 35 % AN; VZ = 70 (ml/g)
$A_7$: S-AN-Copolymerisat; 40 % AN; VZ = 70 (ml/g)

Komponenten $B_1$-$B_5$

$B_1$: S-MSA-Copolymerisat; 8 % MSA; VZ = 70 (ml/g)
$B_2$: S-MSA-Copolymerisat; 13 % MSA; VZ = 70 (ml/g)
$B_3$: S-MSA-Copolymerisat; 17 % MSA; VZ = 70 (ml/g)
$B_4$: S-MSA-Copolymerisat; 24,5 % MSA; VZ = 70 (ml/g)
$B_5$: S-MSA-Copolymerisat; 28 % MSA; VZ = 70 (ml/g)

Weitere Eigenschaften der Komponenten $A_1$-$A_7$ und $B_1$-$B_5$ sind in der Tabelle 1 aufgeführt.

Komponenten $C_1$-$C_4$

$C_1$: Tetrabrombisphenol A
$C_2$: Dreiblockcopolymeres der Formel X-Y-X, das einen zentralen Polypropylenoxidblock mit einem Anteil von 90 Gew.% und an den beiden Enden Polyethylenoxidblöcke von zusammen 10 Gew.% aufweist.
$C_3$: Octadecylalkohol
$C_4$: Zn-stearat

Beispiele und Vergleichsversuche

Die erfindungsgemäßen Formmassen werden in den nachfolgenden Beispielen näher erläutert, ohne daß damit eine Einschränkung vorgenommen werden soll, wobei die angegebenen Prozente Gewichtsprozente sind, sofern nicht anders vermerkt ist.

Herstellung der Mischungen

Die Komponenten der Formmassen der Beispiele und der Vergleichsversuche wurden in den in der Tabelle 2 genannten Mengen in einem Fluidmischer vorgemischt und anschließend auf einem Kokneter bei etwa 220 bis 230°C unter Stickstoff innig verknetet. Die Verweilzeit betrug etwa 4 Minuten.

Das dabei erhaltene Granulat wurde auf einer Einwellen-Extruder-Schnecke aufgeschmolzen und zu gleichmäßigen, für die Spritzgußverarbeitung geeignetem Granulat abgeschlagen. In der Tabelle 2 sind außerdem die Eigenschaften der erhaltenen Mischungen aufgeführt.

Tabelle 1

| Produkt | Schlagzähigkeit ($KJ/m^2$) | E-Modul $N/mm^2$ | Vicattemperatur | Transparenz | Eigenfarbe | Spannungsrißbeständigkeit |
|---|---|---|---|---|---|---|
| $A_1$ | 15 | 3400 | 105 | transparent | 1 | 2 |
| $A_2$ | 15 | 3500 | 106 | transparent | 1 | 2 |
| $A_3$ | 16 | 3500 | 106 | transparent | 1 | 2 |
| $A_4$ | 16 | 3600 | 107 | transparent | 1 | 2 |
| $A_5$ | 17 | 3700 | 107 | transparent | 2 | 1 |
| $A_6$ | 18 | 3800 | 107 | transparent | 2 | 1 |
| $A_7$ | 19 | 3800 | 108 | transparent | 4 | 1 |
| $B_1$ | 12 | 3400 | 118 | transparent | 1 | 3 |
| $B_2$ | 14 | 3500 | 129 | transparent | 1 | 3 |
| $B_3$ | 17 | 3600 | 134 | transparent | 2 | 2 |
| $B_4$ | 18 | 3700 | 142 | transparent | 2 | 2 |
| $B_5$ | 19 | 3800 | 146 | transparent | 4 | 2 |

Tabelle 2

| Beispiel | Zusammensetzung % | Schlagzähigkeit ($kJ/m^2$) | E-Modul ($N/mm^2$) | Vicattemperatur | Transparenz | Eigenfarbe | Spannungsrißbeständigkeit | Verhältnis $a_2/b_2$ |
|---|---|---|---|---|---|---|---|---|
| 1 | 50 $A_1$<br>50 $B_1$ | 15 | 3400 | 110 | transparent | 1 | 2 | 1,25 |
| 2 | 50 $A_2$<br>50 $B_2$ | 16 | 3500 | 113 | transparent | 1 | 2 | 1,15 |
| 3 | 50 $A_1$<br>50 $B_2$ | 16 | 3500 | 112 | transparent | 1 | 2 | 0,77 |
| 4 | 50 $A_2$<br>50 $B_3$ | 19 | 3600 | 116 | transparent | 1 | 2 | 0,88 |

Tabelle 2: Fortsetzung

| Beispiel | Zusammensetzung % | Schlagzähigkeit ($kJ/m^2$) | E-Modul ($N/mm^2$) | Vicattemperatur | Transparenz | Eigenfarbe | Spannungsrißbeständigkeit | Verhältnis $a_2/b_2$ |
|---|---|---|---|---|---|---|---|---|
| 5 | 50 $A_3$<br>50 $B_3$ | 19 | 3600 | 116 | transparent | 1 | 2 | 1,18 |
| 6 | 50 $A_3$<br>50 $B_4$ | 19 | 3700 | 122 | transparent | 1 | 1 | 0,83 |
| 7 | 50 $A_4$<br>50 $B_4$ | 20 | 3700 | 124 | transparent | 1 | 1 | 1,04 |
| 8 | 50 $A_5$<br>50 $B_4$ | 20 | 3800 | 124 | transparent | 1 | 1 | 1,25 |
| 9 | 50 $A_6$<br>50 $B_4$ | 21 | 3800 | 125 | transparent | 2 | 1 | 1,43 |
| 10 | 50 $A_3$<br>50 $B_5$ | 20 | 3700 | 125 | transparent | 2 | 1 | 0,71 |
| 11 | 50 $A_4$<br>50 $B_5$ | 21 | 3800 | 126 | transparent | 2 | 1 | 0,89 |
| 12 | 50 $A_5$<br>50 $B_5$ | 21 | 3800 | 126 | transparent | 2 | 1 | 1,07 |
| 13 | 50 $A_6$<br>50 $B_5$ | 21 | 3900 | 126 | transparent | 2 | 1 | 1,25 |
| 14 | 30 $A_3$<br>70 $B_4$ | 19 | 3700 | 131 | transparent | 1 | 1 | 0,83 |
| 15 | 30 $A_4$<br>70 $B_4$ | 21 | 3700 | 133 | transparent | 1 | 1 | 1,04 |
| 16 | 45 $A_3$<br>50 $B_4$<br>5 $C_1$ | 20 | 3500 | 120 | transparent | 2 | 1 | 0,83 |
| 17 | 49,5 $A_3$<br>50 $B_4$<br>0,5 $C_2$ | 21 | 3100 | 122 | transparent | 1 | 1 | 0,83 |
| 18 | 49,8 $A_3$<br>50 $B_4$<br>0,2 $C_3$ | 20 | 3700 | 121 | transparent | 1 | 1 | 0,83 |
| 19 | 45,95 $A_3$<br>50 $B_4$<br>0,05 $C_4$ | 20 | 3700 | 122 | transparent | 1 | 1 | 0,83 |

Tabelle 2: Fortsetzung

| Beispiel | Zusammensetzung | | Schlagzähigkeit $(kJ/m^2)$ | E-Modul $N/mm^2$ | Vicattemperatur | Transparenz | Eigenfarbe | Spannungsrißbeständigkeit | Verhältnis $a_2/b_2$ |
|---|---|---|---|---|---|---|---|---|---|
| Vgl.-versuche | | | | | | | | | |
| I | 50<br>50 | $A_3$<br>$B_2$ | 9 | 3300 | 107 | trüb | 2 | 3 | 1,54 |
| II | 50<br>50 | $A_1$<br>$B_3$ | 8 | 3300 | 108 | trüb | 2 | 3 | 0,59 |
| III | 50<br>50 | $A_7$<br>$B_4$ | 8 | 3400 | 111 | trüb | 7 | 3 | 1,63 |
| IV | 50<br>50 | $A_3$<br>$B_4$ | 7 | 3800 | 106 | trüb | 3 | 3 | 0,43 |

Patentansprüche

1. Thermoplastische Formmasse, enthaltend

A) 5 bis 95 Gew.%, bezogen auf A+B, mindestens eines Styrol-Acrylnitril-Copolymeren, das aufgebaut ist aus

$a_1$) 99 bis 50 Gew.%, bezogen auf A, Styrol und/oder einem kernalkylsubstituierten Styrolderivat und

$a_2$) 1 bis 50 Gew.%, bezogen auf A, Acrylnitril

und

B) 95 bis 5 Gew.%, bezogen auf A+B, mindestens eines Styrol-Maleinsäureanhydrid-Copolymeren, bestehend aus

$b_1$) 99 bis 50 Gew.%, bezogen auf B, Styrol und/oder einem kernalkylsubstituierten Styrolderivat und

$b_2$) 1 bis 50 Gew.%, bezogen auf B, Maleinsäureanhydrid

dadurch gekennzeichnet, daß das Gewichtsverhältnis der Comonomeren $a_2$) zu $b_2$) in den Copolymerisaten A) und B)

$$1,45 \geq \frac{a_2}{b_2} \geq 0,7$$

beträgt.

2. Thermoplastische Formmasse nach Anspruch 1, bestehend aus den Komponenten A und B und enthaltend ferner, bezogen auf 100 Gew.-Teile A+B, 0,1 bis 10 Gew.-Teile übliche Zusatzstoffe.

3. Thermoplastische Formmasse, bestehend aus

A) 20 bis 80 Gew.%, bezogen auf A+B, mindestens eines Styrol-Acrylnitril-Copolymeren, das einpolymerisiert enthält, jeweils bezogen auf A,

$a_1$) 99 bis 50 Gew.% Styrol oder ein kernalkylsubstituiertes Styrolderivat oder Mischungen daraus
und
$a_2$) 1 bis 50 Gew.% Acrylnitril

und

B) 80 bis 20 Gew.%, bezogen auf A+B, mindestens eines Styrol-Maleinsäureanhydrid-Copolymeren, das einpolymerisiert enthält, jeweils bezogen auf B,

$b_1$) 95 bis 70 Gew.% Styrol oder ein kernalkylsubstituiertes Styrolderivat oder Mischungen daraus
und
$b_2$) 5 bis 30 Gew.% Maleinsäureanhydrid

wobei das Gewichtsverhältnis der Comonomeren $a_2$) zu $b_2$) in den Copolymerisaten A) und B)

$$1{,}45 \geq \frac{a_2}{b_2} \geq 0{,}7$$

beträgt.

4. Thermoplastische Formmasse, bestehend aus

A) 30 bis 50 Gew.%, bezogen auf A+B, mindestens eines Styrol-Acrylnitril-Copolymeren, das einpolymerisiert enthält, jeweils bezogen auf A,

$a_1$) 90 bis 60 Gew.% Styrol oder ein kernalkylsubstituiertes Styrolderivat oder Mischungen daraus
und
$a_2$) 10 bis 40 Gew.% Acrylnitril

und

B) 70 bis 50 Gew.%, bezogen auf A+B, mindestens eines Styrol-Maleinsäureanhydrid-Copolymeren, das einpolymerisiert enthält, jeweils bezogen auf B,

$b_1$) 92 bis 72 Gew.% Styrol oder ein kernalkylsubstituiertes Styrolderivat oder Mischungen daraus
und
$b_2$) 8 bis 28 Gew.% Maleinsäureanhydrid

wobei das Gewichtsverhältnis der Comonomeren $a_2$) zu $b_2$) in den Copolymerisaten A) und B)

$$1{,}43 \geq \frac{a_2}{b_2} \geq 0{,}77$$

beträgt.

5. Verwendung der Formmassen gemäß Anspruch 1 zur Herstellung von Formteilen.

6. Formteile aus Formmassen gemäß Anspruch 1.